# EUROPEAN PATENT APPLICATION

(11) **EP 4 161 021 A1**
(43) Date of publication of application: **05.04.2023**
(21) Application number: 21200280.2
(22) Date of filing: 30.09.2021
(51) Int. Cl.: H04L 41/5051, H04L 41/50, H04W 4/029, H04W 24/02, H04W 64/00

(54) **ASSIGN MANAGEMENT RELATED ENTITIES TO GEOGRAPHICAL AREAS**

(71) Applicant: Nokia Technologies Oy, 02610 Espoo (FI)
(72) Inventor: GOERGE, Jürgen, 81541 München (DE); ALLWANG, Christiane, 81541 München (DE); POLLAKOWSKI, Olaf, 81541 München (DE)
(74) Representative: TBK

(57) **Abstract**

Method comprising:
receiving a request to start collection of management data for a geographical area;
for each of one or more radio cells:
checking whether the respective radio cell fulfills at least one of one or more criteria;
determining one or more network functions serving the respective radio cell if the respective radio cell fulfills the at least one of the one or more criteria;
triggering the determined one or more network functions to start collection of the management data for the respective radio cell; wherein
each of the one or more criteria is only fulfilled if the respective radio cell is related to the geographical area.

## Description

### Field of the invention

The present disclosure relates to management related entities, such as management data, jobs for data collection, network functions, and management services.

### Abbreviations

- 3GPP: 3^{rd} Generation Partnership Project
- 4G / 5G / 6G: 4^{th} / 5^{th} / 6^{th} Generation
- AI: Artificial Intelligence
- API: Application Programming Interface
- CGI: Cell Global identifier
- CU: Central Unit
- DN: Data Network
- DU: Distributed Unit
- ETSI: European Telecommunication Standard Institute
- GoB: Grid of Beams
- HO: Handover
- IE: Information Element
- IOC: Information Object Class
- KPI: Key Performance Indicator
- LAN: Local Area Network
- MDT: Minimization of Drive Tests
- ML: Machine Learning
- MnS: Management Service
- NF: Network Function
- NG-RAN: Next Generation RAN
- RAN: Radio Access Network
- RU: Remote Unit
- SA: System Architecture
- TAI: Tracking Area Identifier
- TS: Technical Specification
- UPF: User Plane Function
- WI: Work Item
- WLAN: Wireless LAN

### Background

Systems for managing networks are organized in several layers where each layer may comprise many tools with different functions that may be provided by different vendors. As a consequence the numerous different management systems are producing a large amount of management data. Management data may comprise measurements taken by the network functions, counts of certain relevant conditions in the network, including aggregations and reports of such data. They may also include alarm messages, log files, configuration data, including inventory data. Management data may be used for management purposes. For example, management data are specified by 3GPP for 5G management. They are classified into 5G performance measurements as defined by 3GPP TS 28.552, 5G end to end key performance indicators as defined by 3GPP TS 28.554 and Trace/MDT data as defined by 3GPP TS 32.422.

In most cases the tools are deployed in a hierarchical way, like a pyramid, where tools consume data from a lower layer, aggregate the data, and pass them to a higher layer of tools. In the past, the operator established this management pyramid by connecting these tools manually and in a more or less static way.

Due to the introduction of additional network technologies into the operator networks (5G, WLAN) and variants thereof (small cell underlays, distributed antenna systems, non-public networks) the number of tools has steadily increased. Further, the scope of network management changes. In the past, the operators were in charge of their nationwide network. Now the operators (try to) offer networks or network services for well-defined geographical areas to serve e.g. campus networks like harbors, sectors for the mining industry, shopping malls, or factories. The term "geographical area" means that the area is defined by geographical coordinates, such as geo-coordinates (altitude and latitude), a distance from a point, lines defining the border of the area etc.

Due to the introduction of more sophisticated algorithms to evaluate the data or to influence the network (e.g. AI/ML), the hierarchy of tools is dissolving because algorithms might require to aggregate data from different levels of abstraction.

Already in the past the task to find the proper management data and the corresponding management services has been a problem for the operator, although the management scope has been the whole network and the time horizon of the services has been basically "always".

With introduction of small-scale campus networks and more short-term services for special events neither the geographical area of network management nor the time horizon are fixed anymore. The use case of finding required management data and corresponding management services appears more frequently.

3GPP SA5 currently has work items to define management services to discover management services and to discover management data. Common to all of them is the inclusion of geographical area.
∘ For the discovery of management data the requirement to support a capability allowing to discover data related to a given geographical area.
∘ For the control of the generation of management data the requirement to support the capability allowing to request measurement collection for a given geographical area. [MADCOL WI, S5-213210]
∘ For the discovery of management services, there is a requirement to discover all management services that are responsible for a given geographical area.

3GPP TS 23.032 describes geographical areas. Namely, it basically describes the coding of geographical areas on interfaces.

OMA-TS-REST-NetAPI-ZonaIPresence-V1-0-20160308-C: "RESTful Network API for Zonal Presence*"* describes the concept of "zones" as a set of access points, where any criterion might be used to define the set of access points, i.e. a zone is not necessarily defined by a geographical area.

### Summary

It is an object of the present invention to improve the prior art.

According to a first aspect of the invention, there is provided an apparatus comprising:
one or more processors, and memory storing instructions that, when executed by the one or more processors, cause the apparatus to perform:
   requesting, from a producer, at least one of
   - to provide an indication of one or more network functions and/or of one or more management services and/or of one or more radio cells fulfilling at least one of one or more criteria;
   - to provide management data fulfilling the at least one criterion; and
   - to start collection of management data fulfilling the at least one criterion; wherein
   the at least one of the criteria is fulfilled only if the respective one of the network functions, the network management services, the radio cells, and the management data are related to a geographical area.

The instructions, when executed by the one or more processors, may further cause the apparatus to perform:
requesting, from the producer, for the geographical area, at least one of
- to provide an indication of all the network functions and/or all the management services and/or radio cells fulfilling the at least one of the criteria;
- to provide all the management data fulfilling the at least one of the criteria; and
- to start collection of all the management data fulfilling the at least one of the criteria.

For each of one or more radio cells, the one or more criteria may comprise at least one of
- the geographical area comprises at least a portion of a coverage area of the respective radio cell corresponding to a threshold value; and
- an antenna of the respective radio cell is located in an area corresponding to the geographical area and a margin around the geographical area.

The request may comprise the threshold value; the threshold value may be predefined; the request may comprise the margin; the margin may be predefined; the request may comprise a hint that only one of the one or more criteria is relevant.

According to a second aspect of the invention, there is provided an apparatus comprising:
one or more processors, and memory storing instructions that, when executed by the one or more processors, cause the apparatus to perform:
receiving a request to provide an indication of one or more network functions serving a geographical area and/or management data related to the geographical area and/or an indication of one or more management services serving the geographical area and/or an indication of one or more radio cells the coverage area of which is covered by the geographical area;
for each of one or more radio cells:
   checking if the radio cell fulfills at least one ofone or more criteria;
   determining one or more network functions serving the respective radio cell if the radio cell fulfills the at least one of the one or more criteria and the request requests to provide the indication of the one or more network functions and/or the management data and/or the indication of the one or more management services, respectively;
   determining management data and/or one or more management services, respectively, related to the determined one or more network functions, if the request requests to provide the management data and/or the indication of the one or more management services, respectively;
   providing, in response to the request, the indication of the determined one or more network functions and/or the indication of the determined one or more management data and/or the indication of the determined one or more management services and/or, if the respective radio cell fulfills the at least one of the one or more criteria and the request requests to provide the indication of the one or more radio cells the coverage area of which is covered by the geographical area, the indication of the respective radio cell, respectively; wherein
   each of the one or more criteria is only fulfilled if the respective radio cell is related to the geographical area.

The instructions, when executed by the one or more processors, may cause the apparatus to perform, for each of one or more radio cells:
determining all the network functions serving the respective radio cell and/or all the management data related to the determined network functions and/or all the management services related to the determined network functions, respectively, if the respective radio cell fulfills the at least one of the one or more criteria.

According to a third aspect of the invention, there is provided an apparatus comprising:
one or more processors, and memory storing instructions that, when executed by the one or more processors, cause the apparatus to perform:
receiving a request to start collection of management data for a geographical area;
for each of one or more radio cells:
   checking whether the respective radio cell fulfills at least one of one or more criteria;
   determining one or more network functions serving the respective radio cell if the respective radio cell fulfills the at least one of the one or more criteria;
   triggering the determined one or more network functions to start collection of the management data for the respective radio cell; wherein
   each of the one or more criteria is only fulfilled if the respective radio cell is related to the geographical area.

The instructions, when executed by the one or more processors, may cause the apparatus to further perform, for each of one or more radio cells:
reporting the determined one or more network functions in response to the received request.

For the apparatuses of each of the second and third aspects, one or more of the following may apply:
The one or more criteria may comprise at least one of:
- the geographical area covers at least a portion of a coverage area of the respective radio cell corresponding to a threshold value; and
- an antenna of the respective radio cell is located in an area corresponding to the geographical area and a margin around the geographical area.

The request may comprise the threshold value; the threshold value may be predefined; the request may comprise the margin; the margin may be predefined.

The instructions, when executed by the one or more processors, may cause the apparatus to further perform, for each of the one or more radio cells:
supervising if the request comprises a hint that only one of the one or more criteria is relevant;
inhibiting checking for the other one of the one or more criteria if the request comprises the hint.

According to a fourth aspect of the invention, there is provided a method comprising:
requesting, from a producer, at least one of
- to provide an indication of one or more network functions and/or of one or more management services and/or of one or more radio cells fulfilling at least one of one or more criteria;
- to provide management data fulfilling the at least one criterion; and
- to start collection of management data fulfilling the at least one criterion; wherein
the at least one of the criteria is fulfilled only if the respective one of the network functions, the network management services, the radio cells, and the management data are related to a geographical area.

The method may further comprise:
requesting, from the producer, for the geographical area, at least one of
- to provide an indication of all the network functions and/or all the management services and/or radio cells fulfilling the at least one of the criteria;
- to provide all the management data fulfilling the at least one of the criteria; and
- to start collection of all the management data fulfilling the at least one of the criteria.

For each of one or more radio cells, the one or more criteria may comprise at least one of
- the geographical area comprises at least a portion of a coverage area of the respective radio cell corresponding to a threshold value; and
- an antenna of the respective radio cell is located in an area corresponding to the geographical area and a margin around the geographical area.

The request may comprise the threshold value; the threshold value may be predefined; the request may comprise the margin; the margin may be predefined; the request may comprise a hint that only one of the one or more criteria is relevant.

According to a fifth aspect of the invention, there is provided a method, comprising:
receiving a request to provide an indication of one or more network functions serving a geographical area and/or management data related to the geographical area and/or an indication of one or more management services serving the geographical area and/or an indication of one or more radio cells the coverage area of which is covered by the geographical area;
for each of one or more radio cells:
   checking if the radio cell fulfills at least one ofone or more criteria;
   determining one or more network functions serving the respective radio cell if the radio cell fulfills the at least one of the one or more criteria and the request requests to provide the indication of the one or more network functions and/or the management data and/or the indication of the one or more management services, respectively;
   determining management data and/or one or more management services, respectively, related to the determined one or more network functions, if the request requests to provide the management data and/or the indication of the one or more management services, respectively;
   providing, in response to the request, the indication of the determined one or more network functions and/or the indication of the determined one or more management data and/or the indication of the determined one or more management services and/or, if the respective radio cell fulfills the at least one of the one or more criteria and the request requests to provide the indication of the one or more radio cells the coverage area of which is covered by the geographical area, the indication of the respective radio cell, respectively; wherein
   each of the one or more criteria is only fulfilled if the respective radio cell is related to the geographical area.

The method may further comprise:
determining all the network functions serving the respective radio cell and/or all the management data related to the determined network functions and/or all the management services related to the determined network functions, respectively, if the respective radio cell fulfills the at least one of the one or more criteria.

According to a sixth aspect of the invention, there is provided a method, comprising:
receiving a request to start collection of management data for a geographical area;
for each of one or more radio cells:
   checking whether the respective radio cell fulfills at least one of one or more criteria;
   determining one or more network functions serving the respective radio cell if the respective radio cell fulfills the at least one of the one or more criteria;
   triggering the determined one or more network functions to start collection of the management data for the respective radio cell; wherein
   each of the one or more criteria is only fulfilled if the respective radio cell is related to the geographical area.

The method may further comprise, for each of one or more radio cells:
reporting the determined one or more network functions in response to the received request.

For the methods of each of the fifth and sixth aspects, one or more of the following may apply:
The one or more criteria may comprise at least one of:
- the geographical area covers at least a portion of a coverage area of the respective radio cell corresponding to a threshold value; and
- an antenna of the respective radio cell is located in an area corresponding to the geographical area and a margin around the geographical area.

The request may comprise the threshold value; the threshold value may be predefined; the request may comprise the margin; the margin may be predefined.

The method may further comprise, for each of the one or more radio cells:
supervising if the request comprises a hint that only one of the one or more criteria is relevant;
inhibiting checking for the other one of the one or more criteria if the request comprises the hint.

Each of the methods of the fourth to sixth aspects may be a method of assigning management related entities.

According to a seventh aspect of the invention, there is provided a computer program product comprising a set of instructions which, when executed on an apparatus, is configured to cause the apparatus to carry out the method according to any of the fourth to sixth aspects. The computer program product may be embodied as a computer-readable medium or directly loadable into a computer.

According to some embodiments of the invention, at least one of the following advantages may be achieved:
- 3^{rd} parties may receive desired management information and/or trigger collection of desired management data without knowing the details of the underlying network.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a network scenario;
Fig. 2 shows a network scenario;
Fig. 3 shows a flowchart according to some example embodiments of the invention;
Fig. 4 shows a flowchart according to some example embodiments of the invention;
Fig. 5 shows a flowchart according to some example embodiments of the invention;
Fig. 6 shows a flowchart according to some example embodiments of the invention;
Fig. 7 shows a flowchart according to some example embodiments of the invention;
Fig. 8 shows a flowchart according to some example embodiments of the invention;
Fig. 9 shows a flowchart according to some example embodiments of the invention;
Fig. 10 shows a flowchart according to some example embodiments of the invention;
Fig. 11 shows an apparatus according to an example embodiment of the invention;
Fig. 12 shows a method according to an example embodiment of the invention;
Fig. 13 shows an apparatus according to an example embodiment of the invention;
Fig. 14 shows a method according to an example embodiment of the invention;
Fig. 15 shows an apparatus according to an example embodiment of the invention;
Fig. 16 shows a method according to an example embodiment of the invention;
Fig. 17 shows an apparatus according to an example embodiment of the invention;
Fig. 18 shows a method according to an example embodiment of the invention;
Fig. 19 shows an apparatus according to an example embodiment of the invention;
Fig. 20 shows a method according to an example embodiment of the invention; and
Fig. 21 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In order to evaluate and assess services provided in specific geographical areas, the operator should detect the corresponding data and corresponding management services both, to collect the data as well as to control the network. Besides, in particular driven by the trend towards multi-vendor networks, in the future there might be more and more (external) consumers without detailed knowledge of the network requesting for management data. As these consumers might not be aware of the corresponding network entities, these requests should be based on geographical areas but not based on identities of the underlying network functions.

Some example embodiments of the invention provide methods and apparatuses allowing the service consumer to request information on management entities and/or to control at least the generation of management data such that the service consumer might not need to know the underlying network functions.

A service to discover management data and an associated service to discover management services shall support the operator. Such discovery services even might enable tools to find data autonomously in the future. Operators or tools might ask discovery services questions like: "Which management services (i.e. service endpoints) do I need to contact in order to retrieve the performance management (PM) data related to the geographical area of a factory campus with these geographical coordinates?"

In a mobile network especially the question for the geographical area associated to a network function is not easy to answer because the location of the network elements running a specific network function is not necessarily the same as the area of service. A network function might run "somewhere" in a cloud computing center, far away from the actual area of service which is determined by the coverage area of a set of cells. Therefore, in a mobile network the question for data, network functions, or management services that are related to a given geographical area does not have a straight forward answer. Preferably, the way of question and answer is well defined and, more preferably, even standardized.

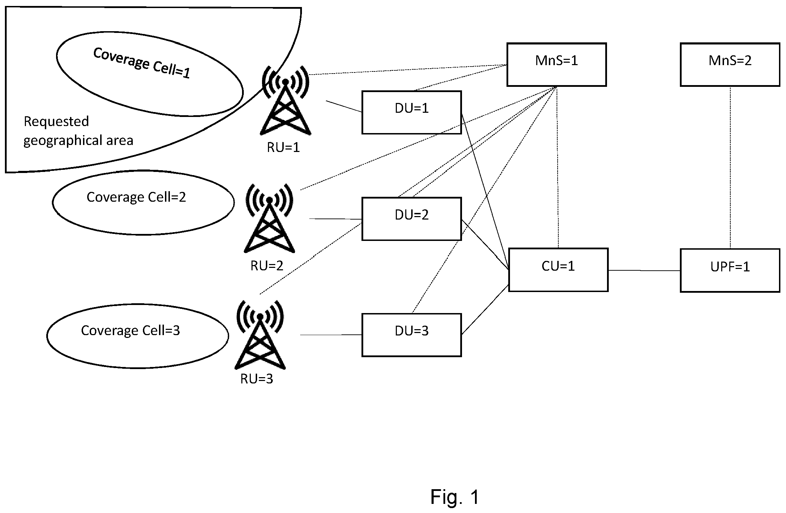

Fig. 1 shows an example of a portion of a network comprising several network functions. RU, DU, CU, UPF and management services (MnS) are involved in providing the coverage of the cells in a specific area. In detail:
- All network functions are sending management data to either MnS=1 or MnS=2.
- Cell=1 is covered by the antenna of RU=1, which is connected to DU=1. Both RU=1 and DU=1 are managed by MnS=1.
- Cell=2 is covered by the antenna of RU=2, which is connected to DU=2. Both RU=2 and DU=2 are managed by MnS=1.
- Cell=3 is covered by the antenna of RU=3, which is connected to DU=3. Both RU=3 and DU=3 are managed by MnS=1
- CU=1 and UPF=1 are involved in the services of all cells. CU=1 is managed by MnS=1 and UPF=1 is managed by MnS=2.

Table 1 shows which network functions are involved in providing service for the coverage area of each of the cells:

**Table 1: Involvement of network functions (RU, DU CU, UPF) and Management services in providing coverage of an area, as shown in Fig. 1**

| Coverage area | RU=1 | RU=2 | RU=3 | DU=1 | DU=2 | DU=3 | CU=1 | UPF=1 | MnS=1 | MnS=2 |
|---|---|---|---|---|---|---|---|---|---|---|
| Cell=1 | Yes | No | No | Yes | No | No | Yes | Yes | Yes | Yes |
| Cell=2 | No | Yes | No | No | Yes | No | Yes | Yes | Yes | Yes |
| Cell=3 | No | No | Yes | No | No | Yes | Yes | Yes | Yes | Yes |

When the geographical area in a request fully overlaps with the coverage area of a cell, then the response contains all network functions and management services that are involved in providing service for that cell. In the example of Fig. 1 and Table 1, where the requested geographical area fully overlaps with the coverage area of Cell=1, the answer would be the entity set:
{RU=1, DU=1, CU=1, UPF=1, MnS=1, MnS=2}

However, in case the requested geographical area and the coverage area overlap only partly, the method of matching the areas needs a criterion to decide between coverage areas "within" or "outside" the requested geographical area.

Some example embodiments of the invention provide the following

### Method to associate managed entities, management data, or management functions to geographical areas

To answer a request of a management consumer for management data or management services that relate to a requested geographical area, the management system may evaluate the overlap of the coverage areas of cells with the requested geographical area. The management system may regard management data or a management service associated to the requested geographical area if the network function is involved in providing the coverage of the cell.

To relate management services (MnS) or management data to a given geographical area the management system may evaluate the overlap of the coverage area of associated cells with the requested geographical area.

The association between MnS or management data with a requested geographical area may be indirect via the coverage area of cells and the connected network functions, that are associated with the MnS or management data.

If the coverage area of a cell completely overlaps with the requested geographical area then all directly and indirectly associated network functions, their associated MnS, and their management data are regarded as associated with the requested area.

Since the requested geographical area in the example of Fig. 1 overlaps with the coverage area of Cell=1 the entities RU=1, DU=1, CU=1, UPF=1, MnS=1, and MnS=2 are involved in providing the coverage of Cell=1 and therefore generate management data related to the requested geographical area:
- RU=1 because the coverage area of its Cell=1 overlaps with the requested geographical area.
- The network functions DU=1, CU=1, and UPF=1 because they are connected to RU=1 or are part of the service offered by RU=1.
- The network management services MnS=1 and MnS=2 because the corresponding network functions are associated to RU=1.
- Management data originating from RU=1, DU=1, CU=1, and UPF=1 that is related to Cell=1.
- Management data that the MnS derive based on the above management data.

Not part of the result set are:
- RU=2 and RU=3 because the coverage areas of Cell=2 and Cell=3 do not overlap with the requested geographical area.
- DU=2 and DU=3 because they are not connected to RU=1
- Management data originating from CU=1 or UPF=1, that is related to Cell=2 or Cell=3 only. Note: HO measurements of Cell=2 and Cell=3 might be related to Cell=1, so it might be part of a result set.
- Management data that the MnSs (any of MnS = 1 and MnS =2) have derived without relationship to Cell=1.

### Handling partial overlap:

The method of matching the requested geographical area with the coverage area of cells may consider a threshold. The threshold may be given as parameter in the request, or it may be predefined. This threshold defines the share of the coverage area of a cell that must be within the requested geographical area in order to regard the cell as included in the geographical area.

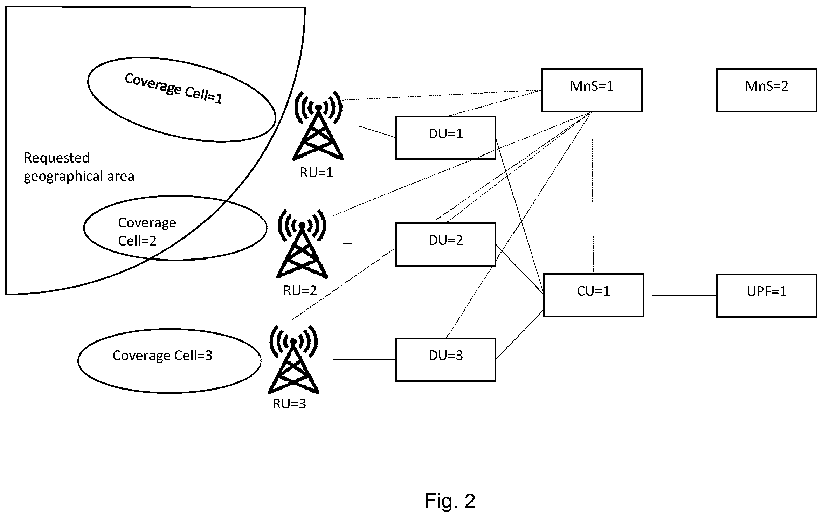

If the share of the coverage area of the cell that is covered by the requested geographical area is larger than the threshold, then the cell is regarded as included in the requested area. E.g. in the example of Fig. 2 (which corresponds to the example of Fig. 1, except that the requested geographical area is different; in Fig. 2, the requested geographical area covers the entire cell = 1, covers about 50% of the area of cell = 2, and does not cover the area of cell = 3), Cell = 2 would be regarded as "included" in case of a threshold of e.g. 30%. As a consequence the management services associated to this cell and the data associated to this cell will be associated with the cell.

If the share of the coverage area of the cell that is covered by the requested geographical area is smaller than the threshold, then this cell is regarded as not included in the requested area. E.g. in Fig. 2, Cell=2 would be regarded as "not included" in case of a threshold of 70%. As a consequence the management services associated to this cell and the data associated to this cell may not be associated with the cell.

If the threshold is included in the request, it is preferred that the request including the threshold is standardized. In some example embodiments, the request may or may not comprise the threshold. If the request comprises the threshold, the value in the request has prevalence over a predefined value of the threshold. If the request does not comprise the threshold, the predefined value of the threshold is applied.

The threshold may be indicated as a relative value (e.g. percentage of the coverage area of a cell) or as an absolute value (e.g. in square meters).

In some use cases, it is considered if the antenna related to the cell (i.e. a point) is located within the requested geographical area (or within a certain margin around the requested geographical area). I.e., instead of or in addition to the criterion that the overlap of the requested geographical area with the coverage area of the cell is larger than some threshold value, another criterion (antenna within the requested geographical area or within a margin around it) may be applied. In some example embodiments, a coverage area of a cell is considered to be included in the requested area if both criteria are fulfilled. In some example embodiments, the coverage area of a cell is considered to be included in the requested area if at least one of the criteria is fulfilled. In some example embodiments, the coverage area of a cell is considered to be included in the requested area if one of the criteria is fulfilled, and the other criterion is ignored.

Similar as described for the threshold for the first discussed criterion, the margin may be predefined and/or included in the request. If there is a predefined margin and the request comprises a margin, the latter supersedes the former. The margin may be 0, i.e., the antenna has to be in the requested geographical area. The margin may have a positive value, i.e., the antenna may be in the requested geographical area or outside the requested geographical area, but within the margin around the requested geographical area. The margin may have a negative value, i.e., the antenna has to be within the requested geographical area and separated from the border of it by at least the margin. In some example embodiments, the meaning of negative and positive values of the margin may be inverse to the above explanation.

In some example embodiments, it is preconfigured whether both, at least one, or only one criterion has to be fulfilled if a cell is considered to be included in the requested area. In some example embodiments, it is signalled in the request whether both, at least one, or only one of the criteria has to be fulfilled. For example, the threshold may be used to define implicitly which one of the criteria is to be applied:
- If the threshold is given in the request, then the MnS shall evaluate the coverage area of the cells with respect to the requested geographical area.
- If the threshold is not given by the request, then the MnS shall evaluate whether the location of the antenna is within the requested geographical area.

This implicit signaling may be considered as a hint which criterion is to be applied. In some example embodiments, explicit hints (i.e., a dedicated IE) are adopted.

### Dealing with changing cell coverage or with modified requested geographical areas:

Background: The cell coverage may change over time e.g. by reconfiguring the tilt of cells or selecting another pattern in beam forming (GoB, "grid of beams"). Similarly the consumer of the management system might change the requested geographical area. In both cases the association between geographical area to cell coverage area might change.

In certain use cases such change might not matter, i.e. the initial association shall remain constant. In such use cases, once determined, the association between geographical area to cell coverage area may be reused if another set of network functions and/or management data and/or management services is requested later in time, or if another job of data collection is to be created alter in time. However, certain use cases might benefit from a dynamic adaptation of the matching. In such example embodiments, the association between geographical area to cell coverage area may be determined for each request. In some example embodiments, the association may have a validity time during which the association is considered to be static, and thereafter, it is determined anew. By using a specific parameter in the request, the consumer might indicate whether a dynamic behaviour of the association is required, or if the association has a validity time. The value of the validity time may be predefined or indicated in the request.

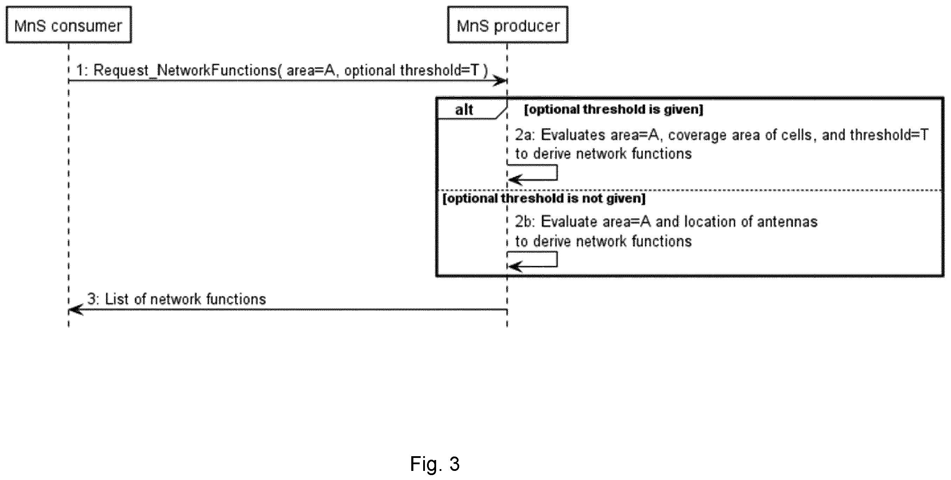

Hereinafter, flow diagrams corresponding to use cases according to some example embodiments of the invention are shown in detail and explained. Basically, the resolution of management services or management data related to a given geographical area shall consider the overlap of the coverage area of the cells with the requested geographical area, taking into account a threshold, or taking into account the location of the antenna. The flow charts of Figs. 3 to 10 are shown for the example that the criterion is adopted that the requested geographical area covers a portion of the radio cell, wherein the minimum portion is indicated by a threshold. The threshold value is predefined or, optionally, comprised in the request.

### Fig. 3: Identify NFs providing service in a geographical area

This functionality supports the operator or other management tools in selecting the proper NFs e.g. when creating a new slice, that shall cover a certain area.

The request specifies the geographical area and, optionally, the threshold. The response contains a list of NFs that are involved in providing coverage for that area.

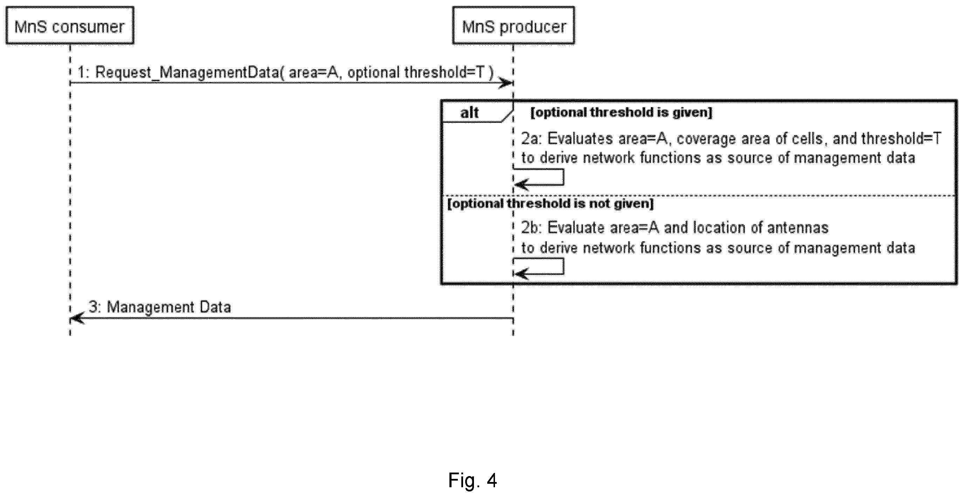

### Fig. 4: Select management data collected in a geographical area

This functionality supports the operator to retrieve management data, that was (already) collected and stored, related to a certain geographical area. This may be required for example for assuring a service in a geographical area (such as a network slice) or for training a ML model for a geographical area.

The request specifies the geographical area and optionally the threshold. The response contains the management data related to that area.

This function may be required for providing a solution to requirements agreed in the 3GPP Rel-17 Wok Item "Management data collection and discovery (MADCOL)".

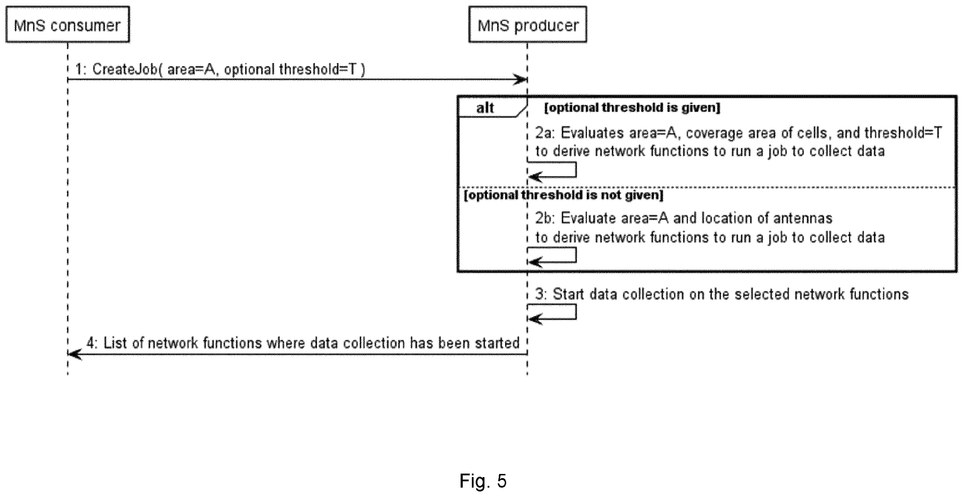

### Fig. 5: Request management data collection in a geographical area

This functionality supports the operator in requesting the collection of (new) management data in a certain geographical area. This may be required for example for assuring a service in a geographical area (such as a network slice) or for training a ML model for a geographical area. Also when analytics need to be produced for a certain geographical area, this functionality may be required.

The request specifies the geographical area and, optionally, the threshold. The MnS producer determines the NFs where management data shall be collected and creates the required data collection jobs. The response may contain a list with NFs where data is collected. For example, the collected data may be reported conventionally. In some example embodiments, the response may not comprise the list of NFs but just a confirmation that the request was received and executed. Then, the collected data may be collected as described with respect to Fig. 4.

This function may be required for providing a solution to requirements agreed in the 3GPP Rel-17 Work Item "Management data collection and discovery (MADCOL)" and in the 3GPP Rel-17 Work Item "Enhanced closed loop automation (eCOSLA)".

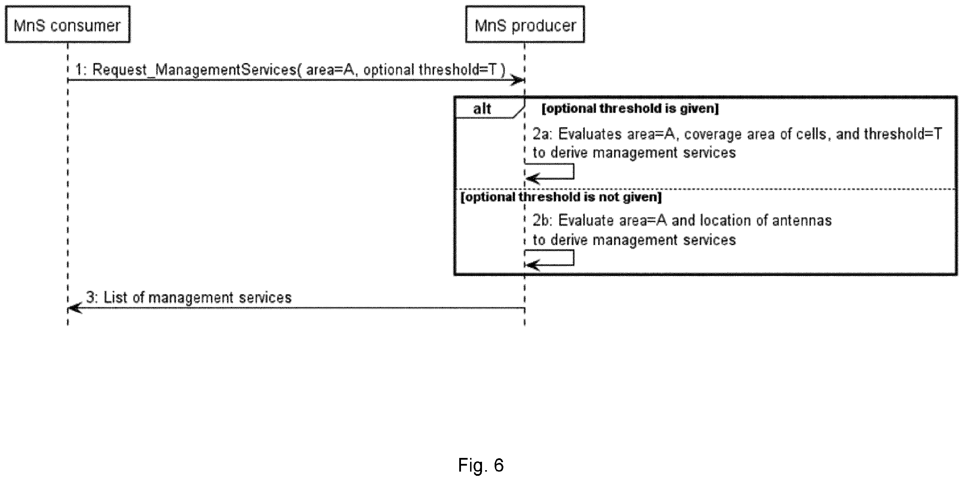

### Fig. 6: Identify the Management Services managing a geographical area

This functionality supports the operator in identifying the Management Services that are managing a geographical area. This may be required as a helper function for many operational tasks relating to geographical areas.

The request specifies the geographical area and, optionally, the threshold. The response contains a list of Management Services.

This function may be required for providing a solution to requirements agreed in the 3GPP Rel-17 Work Item "5G Management Service discovery (5GDMS)".

### Service chaining

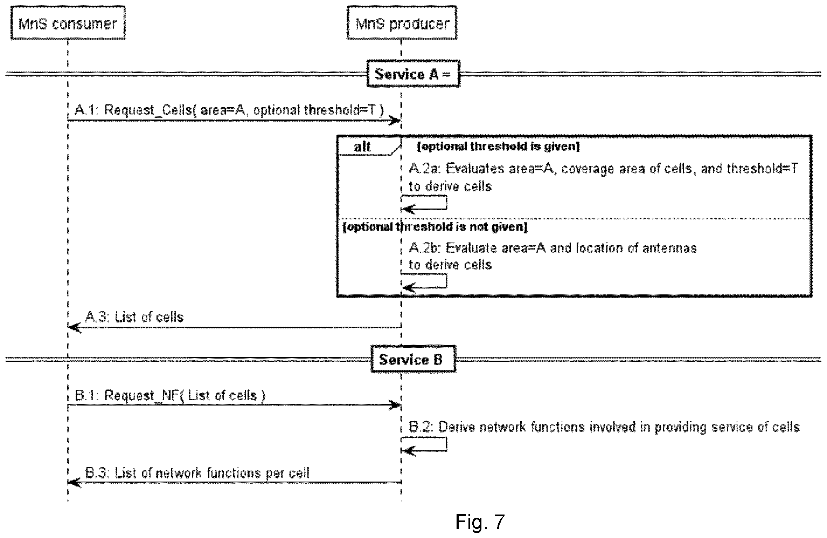

The Management Services described above in Figs. 3 to 6 may be decomposed in a sequence of individual management services. These individual management services and their chaining are shown in Figs. 7 to 10. Each subsequent management service uses the result of its precedent management service. Note that according to the decompositions of Figs. 7 to 10, intermediate results, such as the list of cells and/or the list of network functions per cell, are provided to the MnS consumer. As shown in Figs. 3 to 6, it is not mandatory that the MnS consumer receives such intermediate results. Instead, the MnS producer may autonomously use the intermediate results for the subsequent management service.

### Fig. 7: Identify NFs providing service in a geographical area

MnS A: Maps geographical area into cells
MnS B: Maps cells into NFs that are involved in providing service for these cells

Fig. 7 shows the decomposition of the management service of Fig. 3.

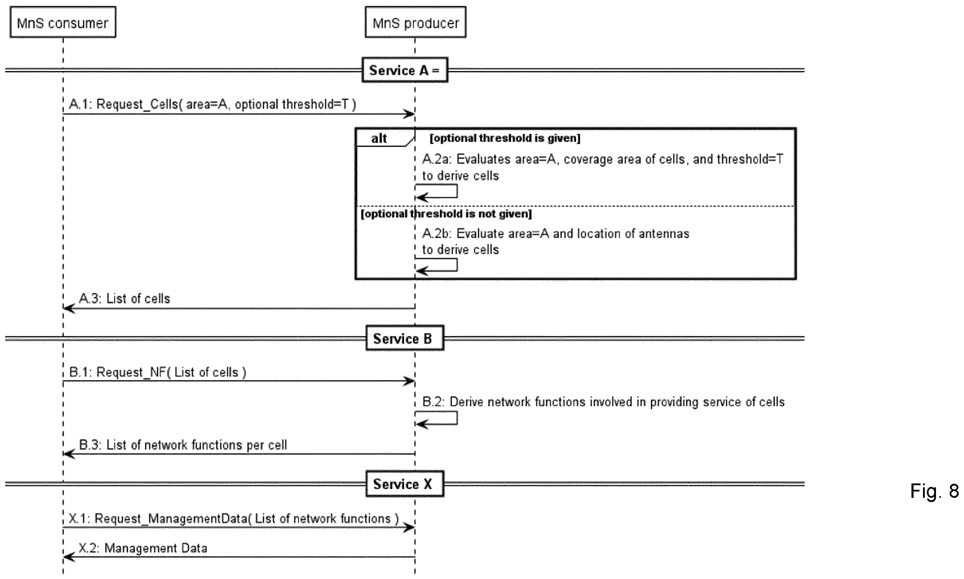

### Fig. 8: Select management data collected in a geographical area

MnS A: Maps geographical area into cells
MnS B: Maps cells into NFs that are involved in providing service for these cells
MnS X: Selects data that is related to these NFs

Fig. 8 shows the decomposition of the management service of Fig. 4.

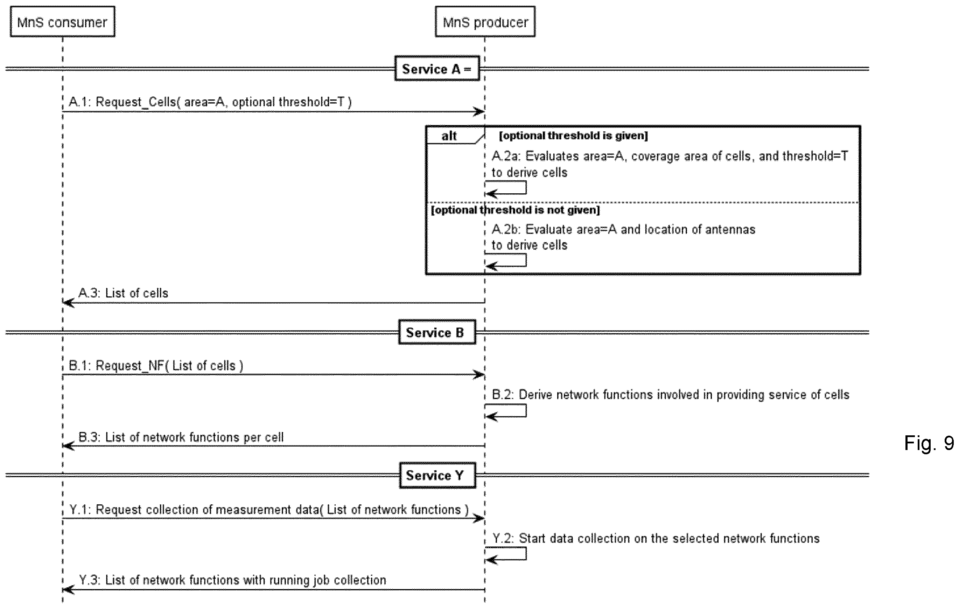

### Fig. 9: Request management data collection in a geographical area

MnS A: Maps geographical area into cells
MnS B: Maps cells into NFs that are involved in providing service for these cells
MnS Y: Creates jobs collecting data on these NFs

Fig. 9 shows the decomposition of the management service of Fig. 5.

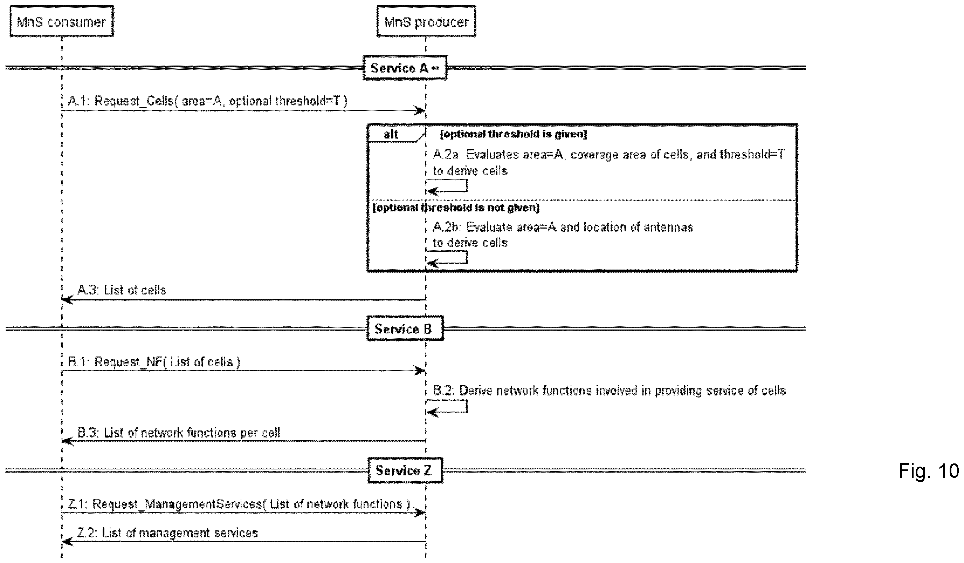

### Fig. 10: Identify Management Services managing a geographical area

MnS A: Maps geographical area into cells
MnS B: Maps cells into NFs that are involved in providing service for these cells
MnS Z: Maps NFs into MnSs that manage these NFs

Fig. 10 shows the decomposition of the management service of Fig. 6.

For MnS A, the coverage area of a given cell may be stored beforehand as configuration of MnS A and/or it might be provided to MnS A, e.g. by a radio planning tool. The coverage area might be derived from measurements of UE, e.g. drive tests or the MDT feature, or calculated by a radio planning tool. It may be defined e.g. by the area where a UE and the cell are able to maintain a communication link of a quality better than a given threshold. For example, this coverage area might be described by its surrounding polygon or an enclosing circle or ellipse.

In the request, for example, the requested geographical area might be defined by its surrounding polygon or an enclosing circle or ellipse.

In some example embodiments, MnS A may detect all cells (or a subset of all cells) which fulfill the condition that the coverage area of the respective cell is covered by the requested geographical area by a portion higher than a threshold

For MnS B, the service producer may evaluate the configuration data of the network to infer the set of one or more NFs that are involved in providing service for these cells.

Each of the flow charts of Figs. 7 to 10 comprises, as a first service, MnS A: Maps geographical area into cells. This management service may be useful stand-alone, too, in order to inform an interested party in the cells the coverage area of which covers a certain area. Correspondingly, each of the flow charts of Figs. 7 to 10 comprises, as a second service, MnS B: Maps cells into NFs that are involved in providing service for these cells. MnS A and MnS B may be considered as basic management services.

Some example embodiments of the invention may be described by the following example embodiment related to 3GPP TS 28.622: ************** Begin: Example embodiment of the invention *****************

### 4.3.A ManagementDataCollectionJob

### 4.3.A.1 Definition

This IOC represents a data collection request job. The requested data could be of kind Trace, MDT (Minimization of Drive Test), RLF (Radio Link Failure) report, RCEF (RRC Connection Establishment Failure) report, PM (performance metrics) or a combination of these.

To activate the production of the requested data, a MnS consumer has to create a ManagementDataCollectionJob object instance on the MnS producer. The MnS producer itself has to set up one or several specific data collectionjobs (Trace Job, PerfMetricJob) taking the attributes of ManagementDataCollectionJob into account. This intermediate step is necessary, as the MnS consumer setting up this ManagmentDataCollectionJob might not be aware of the necessary detailed knowledge about the network e.g. DNs.

External/vertical consumers without detailed knowledge of the network might be the main users of ManagementDataCollectionJob.

The MnS producer will derive multiple jobs from a single ManagementDataCollectionJob for collecting the required management data. Once it receives the measurements from multiple sources, it consolidates the data into a set of management data for reporting. The attribute metricList defines the list of metrics which should be reported.

The attribute area Of Interest specifies the area for which data shall be collected. The area can be configured by a list of TAI, a list of cells identified by NG-RAN CGI or by a geographical area. The MnS producer maps the area Of Interest to corresponding values of the attributes (e.g. tjTrace Target, tj MDT Area Scope, object Instances) in the specific data collectionjobs. This could be done by an internal mapping performed by the management function exposing this MnS. The attribute collectionTimePeriod specifies the duration for which the management data should be reported. The attribute reportingCtrl specifies the method and associated control parameters for reporting the produced measurements to MnS consumers.

The optional attribute anonymization Of Data defines the level of anonymization for management based MDT.

The attribute operational State defines if the object instance is operable or inoperable. This state is set by the object instance or the MnS producer.

### 4.3.A.2 Attributes

| **Attribute Name** | **S** | **isReadable** | **isWritable** | **isInvariant** | **isNotifyable** |
|---|---|---|---|---|---|
| metricList | M | T | T | T | N/A |
| areaOflnterest | M | T | T | T | N/A |
| collectionTimePeriod | M | T | T | T | N/A |
| reporting Ctrl | M | T | T | T | N/A |
| anonymization Of Data | O | T | T | T | N/A |
| operationalState | M | T | F | F | T |

### 4.3.A.3 Attribute constraints

### None.

### 4.3.A.4 Notifications

The following set of notifications is valid.

| **Name** | **S** | **Notes** |
|---|---|---|
| notifvFileReadv | M | -- |
| notify File Preparation Error | M | -- |

### 4.3.B GeoCoordinate <<dataType>>

### 4.3.B.1 Definition

This data type defines a geographical location on earth.

### 4.3. B.2 Attributes

| **Attribute name** | **S** | **isReadable** | **isWritable** | **isInvariant** | **isNotifyable** |
|---|---|---|---|---|---|
| latitude | M | T | T | T | N/A |
| longitude | M | T | T | T | N/A |

### 4.3.B.3 Attribute constraints

### None.

### 4.3.B Area Of Interest <<dataType>>

### 4.3.B.1 Definition

This data type defines the area which shall be considered for the service.

### 4.3. B.2 Attributes

| **Attribute name** | **S** | **isReadable** | **isWritable** | **isInvariant** | **isNotifyable** |
|---|---|---|---|---|---|
| choice | M | T | T | T | N/A |
| >> geo Area | M | T | T | T | N/A |
| >> taiList | M | T | T | T | N/A |
| >> nrCellldList | M | T | T | T | N/A |

### 4.3.B.3 Attribute constraints

### None.

### 4.3.B GeoArea <<dataType>>

### 4.3.B.1 Definition

This data type defines a geographical area by specifying the corners of a convex polygon in the attribute geo Coord List. If three or four geographical coordinates are configured, the shape of the geographical area simplifies to a triangular or rectangular.

The MnS producer shall map the geographical area to cells. There are two evaluation criteria whether a cell belongs to a geographical area or not. If attribute association Threshold is absent, the location of the base station antenna determines the belonging. If attribute associationThreshold is configured, the coverage area is considered. The attribute associationThreshold determines the lower boundary of the coverage ratio. For example, if the associationThreshold is configured to 60%, a cell shall be considered as included in the geographical area if at least 60% of the coverage are of that cell overlaps with the specified geographical area.

If the GeoArea is included in a ManagementDataCollectionJob and the requested trace reporting is targeting a core function, the geographical area shall be mapped to the UE identifiers currently located in this area.

### 4.3. B.2 Attributes

| **Attribute name** | **S** | **isReadable** | **isWritable** | **isInvariant** | **isNotifyable** |
|---|---|---|---|---|---|
| geo Coord List | M | T | T | T | N/A |
| associationThreshold | O | T | T | T | N/A |

### 4.3.B.3 Attribute constraints

### None.

### 4.3.C CollectionDuration <<dataType>>

### 4.3.C.1 Definition

This data type defines a collection time duration for which the management data should be reported.

### 4.3.C.2 Attributes

| **Attribute name** | **S** | **isReadable** | **isWritable** | **isInvariant** | **isNotifyable** |
|---|---|---|---|---|---|
| startTime | M | T | T | T | T |
| endTime | M | T | T | T | T |

### 4.4.1 Attribute properties

| | | |
|---|---|---|
| metricList | List of metrics which shall be reported. This could include metrics defined in TS 28.552 [20], TS 28.554 [28], TS 37.320 [x] and TS 32.422 [30]. The metrics are identified with their names. | type: string |
| | | multiplicity: 1..* |
| | | isOrdered: N/A |
| | | is Unique: N/A |
| | For measurements defined in TS 28.552 [20] the name is defined according to the KPI definitions template as the component designated with e) | defaultValue: No |
| | | isNullable: True |
| | For KPIs defined in TS 28.554 [28] the name is defined according to the KPI definitions template as the component designated with a). | |
| | For MDT measurements defined in TS 37.320 [x] the name is MDT mode (either "LoggedMDT" or "Immediate MDT"). In case of Immediate MDT, the name consists of two items. The first item is the MDT mode, the second item identifies the name of the measurement itself i.e. M1, M2,..., M9, RLF, RCEF. | |
| | For Trace measurements defined in TS 32.422 [30] the name is constructed as follows: | |
| | - "NEtype.interface" for messages to/from a certain NE on a certain interface | |
| | - "NEtype" for messages to/from a certain NE | |
| | allowedValues: N/A | |
| areaOflnterest | It specifies the area from where the management data shall be collected. | type: AreaOflnterest multiplicity: 1..* |
| | | isOrdered: N/A |
| | allowedValues: N/A | is Unique: N/A |
| | | defaultValue: None |
| | | isNullable: True |
| geoArea | It specifies the geographical area from where the management data shall be collected. | type: GeoArea |
| | | multiplicity: 1..* |
| | | isOrdered: N/A |
| | allowedValues: N/A | is Unique: N/A |
| | | defaultValue: None |
| | | isNullable: True |
| geoCoordList | List of geo-coordinates | type: GeoCoordinate |
| | | multiplicity: 1..* |
| | allowedValues: N/A | isOrdered: N/A |
| | | is Unique: N/A |
| | | defaultValue: None |
| | | isNullable: True |
| longitude | It specifies the longitude of a geographical coordinate based on World Geodetic System (1984 version) global reference frame (WGS 84). The unit is degree. Positive values correspond to degrees east of 0 degrees longitude. | type: float |
| | | multiplicity: 1 |
| | | isOrdered: N/A |
| | | is Unique: N/A |
| | Allowed values: -180.0000, ... ,+180.0000 | defaultValue: N/A |
| | | isNullable: True |
| latitude | It specifies the latitude of a geographical coordinate based on World Geodetic System (1984 version) global reference frame (WGS 84). The unit is degree. Positive values correspond to the northern hemisphere. | type: float |
| | | multiplicity: 1 |
| | | isOrdered: N/A |
| | Allowed values: -90.0000, ...,90.0000 | is Unique: N/A |
| | | defaultValue: N/A |
| | | isNullable: True |
| associationThreshold | It specifies the threshold of coverage area in percentage whether a cell belongs to the geographical area or not. If this attribute is absent, the location of the base station antenna determines if a cell belong to the geographical area or not. | type: Integer |
| | | multiplicity: 1 |
| | | isOrdered: N/A |
| | | is Unique: N/A |
| | | defaultValue: No |
| | Allowed values: 1,...,100 | isNullable: True |

************** End: Example embodiment of the invention *****************

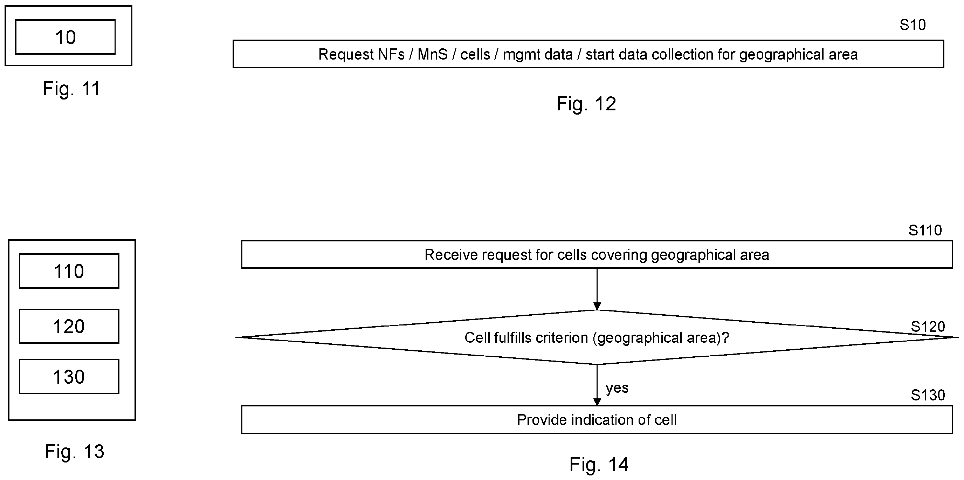

Fig. 11 shows an apparatus according to an example embodiment of the invention. The apparatus may be a service consumer or an element thereof. Fig. 12 shows a method according to an example embodiment of the invention. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises means for requesting 10. The means for requesting 10 may be a requesting means. The means for requesting 10 may be a request. The means for requesting 10 may be a requesting processor.

The means for requesting 10 requests (S10), from a producer, at least one of
- to provide an indication of one or more network functions and/or of one or more management services and/or of one or more radio cells fulfilling at least one of one or more criteria;
- to provide management data fulfilling the at least one criterion; and
- to start collection of management data fulfilling the at least one criterion.

The at least one of the criteria is fulfilled only if the respective one of the network functions, the network management services, the radio cells, and the management data are related to a geographical area. The geographical area is indicated in the request. For example, a criterion may be that the geographical area covers at least a portion of a radio cell. For example, a criterion may be that an antenna of a radio cell is within the geographical area (potentially with some margin). For both of these criteria, the network functions and/or management services and/or management data are related to the respective radio cell.

Fig. 13 shows an apparatus according to an example embodiment of the invention. The apparatus may be a service producer or an element thereof. Fig. 14 shows a method according to an example embodiment of the invention. The apparatus according to Fig. 13 may perform the method of Fig. 14 but is not limited to this method. The method of Fig. 14 may be performed by the apparatus of Fig. 13 but is not limited to being performed by this apparatus.

The apparatus comprises means for receiving 110, means for checking 120, and means for providing 130. The means for receiving 110, means for checking 120, and means for providing 130 may be a receiving means, checking means, and providing means, respectively. The means for receiving 110, means for checking 120, and means for providing 130 may be a receiver, checker, and provider, respectively. The means for receiving 110, means for checking 120, and means for providing 130 may be a receiving processor, checking processor, and providing processor, respectively.

The means for receiving 110 receives a request to provide an indication of one or more radio cells covered by a geographical area (S110).

The means for checking 120 checks, for each of one or more radio cells (also named candidate cells), if the radio cell fulfills at least one of one or more criteria (S120). Each of the one or more criteria is only fulfilled if the respective radio cell is related to the geographical area. For example, the one or more criteria may comprise at least one of:
- the geographical area covers at least a portion of the respective radio cell corresponding to a threshold value; and
- an antenna of the respective radio cell is located in an area corresponding to the geographical area and a margin around the geographical area.

In some example embodiments of the invention, candidate cells are all cells that the apparatus is aware of, i.e. all cells that have been configured as preparation of the apparatus. In some example embodiments, the apparatus may designate the candidate cells by comparing coverage area coordinates (e.g. corners or centre of the coverage area) of the respective cell and range of coordinates (e.g. min/max of longitude and latitude) of the geographical area, and/or by comparing coordinates of antenna and range of coordinates of the geographical area.

For each of one or more radio cells, if the respective radio cell fulfills the at least one of the one or more criteria (S120 = yes), the means for providing 130 provides, in response to the request received in S110, the indication of the respective radio cell (S130).

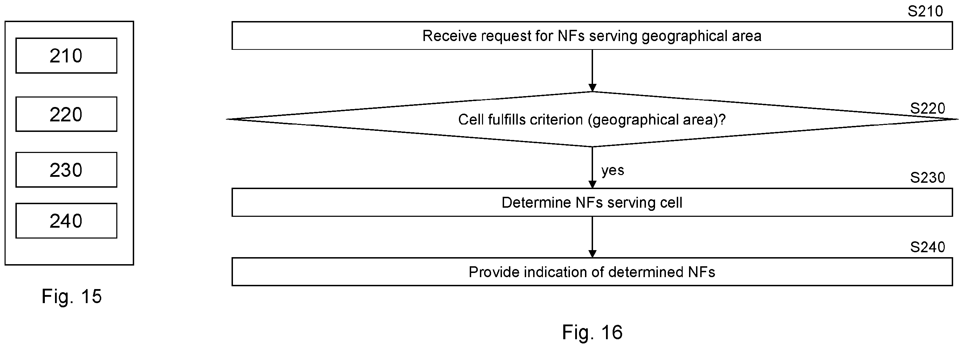

Fig. 15 shows an apparatus according to an example embodiment of the invention. The apparatus may be a service producer or an element thereof. Fig. 16 shows a method according to an example embodiment of the invention. The apparatus according to Fig. 15 may perform the method of Fig. 16 but is not limited to this method. The method of Fig. 16 may be performed by the apparatus of Fig. 15 but is not limited to being performed by this apparatus.

The apparatus comprises means for receiving 210, means for checking 220, means for determining 230, and means for providing 240. The means for receiving 210, means for checking 220, means for determining 230, and means for providing 240 may be a receiving means, checking means, determining means, and providing means, respectively. The means for receiving 210, means for checking 220, means for determining 230, and means for providing 240 may be a receiver, checker, determiner, and provider, respectively. The means for receiving 210, means for checking 220, means for determining 230, and means for providing 240 may be a receiving processor, checking processor, determining processor, and providing processor, respectively.

The means for receiving 210 receives a request to provide an indication of one or more network functions serving a geographical area (S210).

The means for checking 220 checks, for each of one or more radio cells (candidate cells, as explained hereinabove), if the radio cell fulfills at least one of one or more criteria (S220). Each of the one or more criteria is only fulfilled if the respective radio cell is related to the geographical area. For example, the one or more criteria may comprise at least one of:
- the geographical area covers at least a portion of the respective radio cell corresponding to a threshold value; and
- an antenna of the respective radio cell is located in an area corresponding to the geographical area and a margin around the geographical area.

For each of the one or more radio cells, if the respective radio cell fulfills the at least one of the one or more criteria (S220 = yes), the means for determining 230 determines one or more network functions serving the respective radio cell (S230).

For each of the one or more radio cells, the means for providing 240 provides, in response to the request received in S210, the indication of the determined network functions (S240).

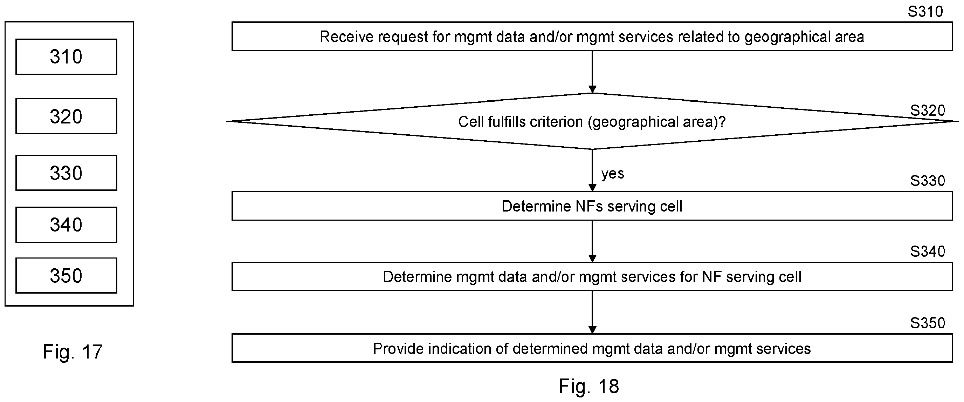

Fig. 17 shows an apparatus according to an example embodiment of the invention. The apparatus may be a service producer or an element thereof. Fig. 18 shows a method according to an example embodiment of the invention. The apparatus according to Fig. 17 may perform the method of Fig. 18 but is not limited to this method. The method of Fig. 18 may be performed by the apparatus of Fig. 17 but is not limited to being performed by this apparatus.

The apparatus comprises means for receiving 310, means for checking 320, first means for determining 330, second means for determining 340, and means for providing 350. The means for receiving 310, means for checking 320, first means for determining 330, second means for determining 340, and means for providing 350 may be a receiving means, checking means, first determining means, second determining means, and providing means, respectively. The means for receiving 310, means for checking 320, first means for determining 330, second means for determining 340, and means for providing 350 may be a receiver, checker, first determiner, second determiner, and provider, respectively. The means for receiving 310, means for checking 320, first means for determining 330, second means for determining 340, and means for providing 350 may be a receiving processor, checking processor, first determining processor, second determining processor, and providing processor, respectively.

The means for receiving 310 receives a request to provide management data related to the geographical area and/or an indication of one or more management services serving the geographical area (S310).

The means for checking 320 checks, for each of one or more radio cells (candidate cells, as explained hereinabove), if the radio cell fulfills at least one of one or more criteria (S320). Each of the one or more criteria is only fulfilled if the respective radio cell is related to the geographical area. For example, the one or more criteria may comprise at least one of:
- the geographical area covers at least a portion of the respective radio cell corresponding to a threshold value; and
- an antenna of the respective radio cell is located in an area corresponding to the geographical area and a margin around the geographical area.

For each of the one or more radio cells, if the respective radio cell fulfills the at least one of the one or more criteria (S320 = yes), the first means for determining 330 determines one or more network functions serving the respective radio cell (S330).

The second means for determining 340 determines management data and/or one or more management services, respectively, related to the one or more network functions determined in S330 (S340).

For each of the one or more radio cells, the means for providing 350 provides, in response to the request received in S310, the management data and/or the indication of the determined one or more management services (S350).

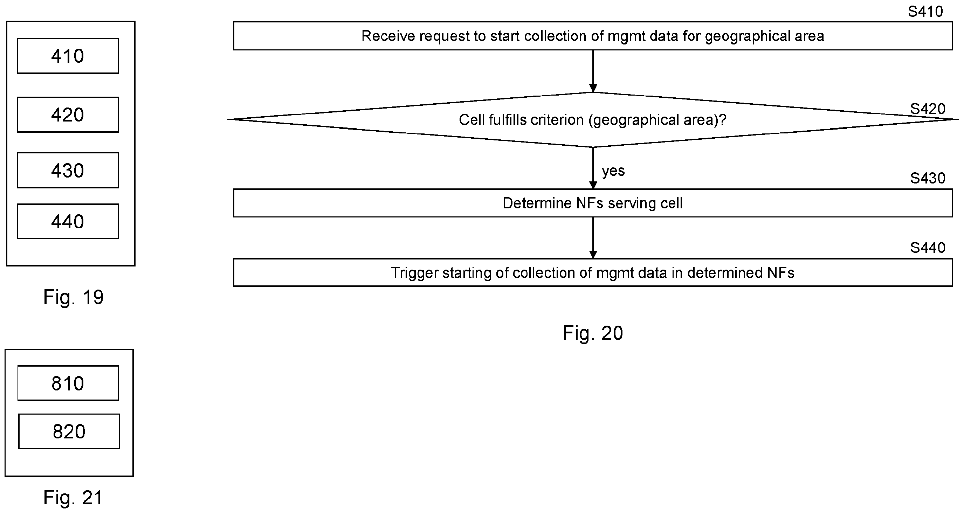

Fig. 19 shows an apparatus according to an example embodiment of the invention. The apparatus may be a service producer or an element thereof. Fig. 20 shows a method according to an example embodiment of the invention. The apparatus according to Fig. 19 may perform the method of Fig. 20 but is not limited to this method. The method of Fig. 20 may be performed by the apparatus of Fig. 19 but is not limited to being performed by this apparatus.

The apparatus comprises means for receiving 410, means for checking 420, means for determining 430, and means for triggering 440. The means for receiving 410, means for checking 420, means for determining 430, and means for triggering 440 may be a receiving means, checking means, determining means, and triggering means, respectively. The means for receiving 410, means for checking 420, means for determining 430, and means for triggering 440 may be a receiver, checker, determiner, and trigger, respectively. The means for receiving 410, means for checking 420, means for determining 430, and means for triggering 440 may be a receiving processor, checking processor, determining processor, and triggering processor, respectively.

The means for receiving 410 receives a request to start collection of management data for a geographical area (S410).

The means for checking 420 checks, for each of one or more radio cells (candidate cells, as explained hereinabove), if the radio cell fulfills at least one of one or more criteria (S420). Each of the one or more criteria is only fulfilled if the respective radio cell is related to the geographical area. For example, the one or more criteria may comprise at least one of:
- the geographical area covers at least a portion of the respective radio cell corresponding to a threshold value; and
- an antenna of the respective radio cell is located in an area corresponding to the geographical area and a margin around the geographical area.

For each of the one or more radio cells, if the respective radio cell fulfills the at least one of the one or more criteria (S420 = yes), the means for determining 430 determines one or more network functions serving the respective radio cell (S430).

For each of the one or more radio cells, the means for triggering 440 triggers the one or more network functions determined in S430 to start collection of the management data for the respective radio cell (S440). Optionally, a means for providing may provide, in response to the request received in S410, provide an indication of the network functions for which the collection of management data is started.

Fig. 21 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 12, 14, 16, 18, and 20 and related description.

Some example embodiments are explained with respect to a 5G network. However, the invention is not limited to 5G. It may be used in other networks, too, e.g. in previous or forthcoming generations of 3GPP networks such as 4G, 6G, or 7G, etc. The invention is not limited to 3GPP communication networks but may be applied to non-3GPP mobile communication networks, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

If the present application, and in particular the claims, describe a "first [entity]" and a "second [entity]", these entities may be the same or different from each other unless it is explicitly stated or made clear from the context that only one of these options is applicable.

According to the above description, it should thus be apparent that example embodiments of the present invention provide, for example, a service consumer or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a service producer or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus comprising:
one or more processors, and memory storing instructions that, when executed by the one or more processors, cause the apparatus to perform:
requesting, from a producer, at least one of
- to provide an indication of one or more network functions and/or of one or more management services and/or of one or more radio cells fulfilling at least one of one or more criteria;
- to provide management data fulfilling the at least one criterion; and
- to start collection of management data fulfilling the at least one criterion; wherein
the at least one of the criteria is fulfilled only if the respective one of the network functions, the network management services, the radio cells, and the management data are related to a geographical area.

2. The apparatus according to claim 1, wherein the instructions, when executed by the one or more processors, further cause the apparatus to perform:
requesting, from the producer, for the geographical area, at least one of
- to provide an indication of all the network functions and/or all the management services and/or radio cells fulfilling the at least one of the criteria;
- to provide all the management data fulfilling the at least one of the criteria; and
- to start collection of all the management data fulfilling the at least one of the criteria.

3. The apparatus according to any of claims 1 to 2, wherein, for each of one or more radio cells, the one or more criteria comprises at least one of
- the geographical area comprises at least a portion of a coverage area of the respective radio cell corresponding to a threshold value; and
- an antenna of the respective radio cell is located in an area corresponding to the geographical area and a margin around the geographical area.

4. The apparatus according to claim 3, wherein at least one of:
the request comprises the threshold value;
the threshold value is predefined;
the request comprises the margin;
the margin is predefined; and
the request comprises a hint that only one of the one or more criteria is relevant.

5. Apparatus comprising:
one or more processors, and memory storing instructions that, when executed by the one or more processors, cause the apparatus to perform:
receiving a request to provide an indication of one or more network functions serving a geographical area and/or management data related to the geographical area and/or an indication of one or more management services serving the geographical area and/or an indication of one or more radio cells the coverage area of which is covered by the geographical area;
for each of one or more radio cells:
checking if the radio cell fulfills at least one ofone or more criteria;
determining one or more network functions serving the respective radio cell if the radio cell fulfills the at least one of the one or more criteria and the request requests to provide the indication of the one or more network functions and/or the management data and/or the indication of the one or more management services, respectively;
determining management data and/or one or more management services, respectively, related to the determined one or more network functions, if the request requests to provide the management data and/or the indication of the one or more management services, respectively;
providing, in response to the request, the indication of the determined one or more network functions and/or the indication of the determined one or more management data and/or the indication of the determined one or more management services and/or, if the respective radio cell fulfills the at least one of the one or more criteria and the request requests to provide the indication of the one or more radio cells the coverage area of which is covered by the geographical area, the indication of the respective radio cell, respectively; wherein
each of the one or more criteria is only fulfilled if the respective radio cell is related to the geographical area.

6. The apparatus according to claim 5, wherein the instructions, when executed by the one or more processors, cause the apparatus to perform, for each of one or more radio cells:
determining all the network functions serving the respective radio cell and/or all the management data related to the determined network functions and/or all the management services related to the determined network functions, respectively, if the respective radio cell fulfills the at least one of the one or more criteria.

7. Apparatus comprising:
one or more processors, and memory storing instructions that, when executed by the one or more processors, cause the apparatus to perform:
receiving a request to start collection of management data for a geographical area;
for each of one or more radio cells:
checking whether the respective radio cell fulfills at least one of one or more criteria;
determining one or more network functions serving the respective radio cell if the respective radio cell fulfills the at least one of the one or more criteria;
triggering the determined one or more network functions to start collection of the management data for the respective radio cell; wherein
each of the one or more criteria is only fulfilled if the respective radio cell is related to the geographical area.

8. The apparatus according to claim 7, wherein the instructions, when executed by the one or more processors, cause the apparatus to further perform, for each of one or more radio cells:
reporting the determined one or more network functions in response to the received request.

9. The apparatus according to any of claims 5 to 8, wherein the one or more criteria comprise at least one of:
- the geographical area covers at least a portion of a coverage area of the respective radio cell corresponding to a threshold value; and
- an antenna of the respective radio cell is located in an area corresponding to the geographical area and a margin around the geographical area.

10. The apparatus according to claim 9, wherein at least one of
- the request comprises the threshold value;
- the threshold value is predefined;
- the request comprises the margin; and
- the margin is predefined.

11. The apparatus according to any of claims 5 to 10, wherein the instructions, when executed by the one or more processors, cause the apparatus to further perform, for each of the one or more radio cells:
supervising if the request comprises a hint that only one of the one or more criteria is relevant;
inhibiting checking for the other one of the one or more criteria if the request comprises the hint.

12. Method comprising:
requesting, from a producer, at least one of
- to provide an indication of one or more network functions and/or of one or more management services and/or of one or more radio cells fulfilling at least one of one or more criteria;
- to provide management data fulfilling the at least one criterion; and
- to start collection of management data fulfilling the at least one criterion; wherein
the at least one of the criteria is fulfilled only if the respective one of the network functions, the network management services, the radio cells, and the management data are related to a geographical area.

13. Method comprising:
receiving a request to provide an indication of one or more network functions serving a geographical area and/or management data related to the geographical area and/or an indication of one or more management services serving the geographical area and/or an indication of one or more radio cells the coverage area of which is covered by the geographical area;
for each of one or more radio cells:
checking if the radio cell fulfills at least one ofone or more criteria;
determining one or more network functions serving the respective radio cell if the radio cell fulfills the at least one of the one or more criteria and the request requests to provide the indication of the one or more network functions and/or the management data and/or the indication of the one or more management services, respectively;
determining management data and/or one or more management services, respectively, related to the determined one or more network functions, if the request requests to provide the management data and/or the indication of the one or more management services, respectively;
providing, in response to the request, the indication of the determined one or more network functions and/or the indication of the determined one or more management data and/or the indication of the determined one or more management services and/or, if the respective radio cell fulfills the at least one of the one or more criteria and the request requests to provide the indication of the one or more radio cells the coverage area of which is covered by the geographical area, the indication of the respective radio cell, respectively; wherein
each of the one or more criteria is only fulfilled if the respective radio cell is related to the geographical area.

14. Method comprising:
receiving a request to start collection of management data for a geographical area;
for each of one or more radio cells:
checking whether the respective radio cell fulfills at least one of one or more criteria;
determining one or more network functions serving the respective radio cell if the respective radio cell fulfills the at least one of the one or more criteria;
triggering the determined one or more network functions to start collection of the management data for the respective radio cell; wherein
each of the one or more criteria is only fulfilled if the respective radio cell is related to the geographical area.

15. A computer program product comprising a set of instructions which, when executed on an apparatus, is configured to cause the apparatus to carry out the method according to any of claims 12 to 14.
